# EUROPEAN PATENT APPLICATION

(11) **EP 4 772 375 A1**
(43) Date of publication of application: **08.07.2026**
(21) Application number: 24869644.5
(22) Date of filing: 29.03.2024
(51) Int. Cl.: B60K 6/442, B60W 20/20, B60W 20/40, B60W 10/06, B60W 10/08, B60W 20/10

(54) **HYBRID DRIVE SYSTEM, HYBRID DRIVE SYSTEM CONTROL METHOD, AND VEHICLE**

(30) Priority: 25.09.2023 CN 202311249378; 25.09.2023 CN 202311246026
(71) Applicant: BYD Company Limited, Shenzhen, Guangdong 518118 (CN)
(72) Inventor: YANG, Dongsheng, Shenzhen, Guangdong 518118 (CN); ZHU, Futang, Shenzhen, Guangdong 518118 (CN); ZHANG, Hui, Shenzhen, Guangdong 518118 (CN); DUAN, Yubo, Shenzhen, Guangdong 518118 (CN); WANG, Chunsheng, Shenzhen, Guangdong 518118 (CN)
(74) Representative: Taor, Simon Edward William
(86) International application number: PCT/CN2024/085027
(87) International publication number: WO 2025/066074

(57) **Abstract**

A hybrid drive system (100), a hybrid drive system control method, and a vehicle. The hybrid drive system (100) comprises: an engine (1), a generator (2), a drive motor (3), and a controller (4). The controller (4) is connected to the engine (1), the generator (2) and the drive motor (3) respectively, and is used in the process of the hybrid drive system (100) switching from a dual-motor drive mode to a parallel mode to: when the generator (2) unloads torque, control the drive motor (3) to increase the torque, and when the engine (1) loads torque, control the drive motor (3) to decrease the torque, so that the total output torque of the hybrid drive system (100) is equal to the total required torque, the total required torque being constant.

## Description

### CROSS-REFERENCE TO RELATED APPLICATIONS

The present disclosure claims priority to Chinese Patent Application No.202311249378.0, filed with the China National Intellectual Property Administration (CNIPA) on September 25, 2023, entitled "HYBRID DRIVE SYSTEM AND VEHICLE", and Chinese Patent Application No. 202311246026.X, filed with the CNIPA on September 25, 2023, entitled "HYBRID DRIVE SYSTEM CONTROL METHOD, APPARATUS, SYSTEM, AND VEHICLE", which are incorporated herein by reference in its entirety.

### FIELD

The present disclosure relates to the field of hybrid technology, and in particular, to a hybrid drive system, a hybrid drive system control method, and a vehicle.

### BACKGROUND

With the advancement of three-electric technologies and the improvement of charging infrastructure, hybrid electric vehicles (HEVs) are increasingly emphasizing the use of electric power while reducing reliance on internal combustion engines (ICEs). A typical series-parallel architecture enables the vehicle to operate efficiently in all scenarios: pure electric mode is adopted when the battery is at a high state of charge (SoC); series mode is used at low speeds with a low battery SoC; and hybrid mode is activated during high-speed driving. Hybrid drive systems typically include operating modes such as single-motor drive mode, dual-motor drive mode, hybrid mode, and series mode. The system switches between these modes based on the vehicle's power demand. Among these, how to ensure the vehicle's overall power demand during the mode switching process is particularly crucial for enhancing the driving experience.

### SUMMARY

To resolve the problems existing in the related technologies, the present disclosure provides a hybrid drive system, a hybrid drive system control method, and a vehicle.

To achieve the above objective, in a first aspect, the present disclosure provides a hybrid drive system, which includes an engine, a generator, a drive motor, and a controller;
The controller, which is respectively connected to the engine, the generator, and the drive motor, is used to control the drive motor to increase torque when the generator unloads torque and to control the drive motor to decrease torque when the engine loads torque during the system's switching from dual-motor drive mode to parallel mode. This ensures that the total output torque of the system is equal to the total demand torque, and the total demand torque remains constant.

In the second aspect, the present disclosure provides a control method for a hybrid drive system. The system includes an engine, a generator, and a drive motor, and the method includes:
During the system's switching from dual-motor drive mode to parallel mode, when the generator unloads torque, the drive motor is controlled to increase torque; and when the engine loads torque, the drive motor is controlled to decrease torque, so that the total output torque of the system is equal to the total demand torque, and the total demand torque is constant.

In an embodiment, the method further includes:
Obtain the current power demand of the system;
If the current power demand is greater than the first demand threshold and less than or equal to the second demand threshold, the system is controlled to operate in the dual-motor drive mode. When the current power demand is less than or equal to the first demand threshold, the system operates in the single-motor drive mode. The output capability of the drive motor is greater than or equal to the second demand threshold, and the drive allocation of the drive motor in the dual-motor drive mode is less than the first demand threshold. This ensures that during the switching process of the system from the dual-motor drive mode to the hybrid mode, when the generator unloads torque, the drive motor has a torque margin for compensating the torque unloaded by the generator.

In the third aspect, the present disclosure provides a vehicle, including:
Hybrid drive system, wherein the hybrid drive system is the hybrid drive system provided in the first aspect of the present disclosure; and
Wheels.

In the above technical solution, during the switching process of the hybrid drive system from the dual-motor drive mode to the parallel mode, when the generator unloads torque, the function of the generator starting the engine is realized by transferring the torque of the generator to the drive motor. Herein, the drive motor needs to withstand the torque output during the time it takes for the torque to be transferred from the generator to the engine and output a corresponding torque. In this way, it can be ensured that during the mode switching process, the total output torque of the hybrid drive system is equal to the total demand torque, so as to meet the vehicle's power demand and improve the driving experience.

The additional aspects and advantages of the present disclosure are partially provided in detail in the following detailed description section.

### BRIEF DESCRIPTION OF THE DRAWINGS

The accompanying drawings are intended to provide a further understanding of the present disclosure and constitute a part of the specification, and are used together with the following detailed description to explain the present disclosure, but do not constitute a limitation on the present disclosure. In the accompanying drawings:
FIG. 1 is a block diagram of a hybrid drive system according to an exemplary embodiment.
FIG. 2 is a block diagram of a hybrid drive system according to another exemplary embodiment.
FIG. 3 is a structural schematic diagram of a hybrid system according to an exemplary embodiment.
FIG. 4 is an energy transfer schematic diagram of a single-motor drive mode according to an exemplary embodiment.
FIG. 5 is an energy transfer schematic diagram of a dual-motor drive mode according to an exemplary embodiment.
FIG. 6 is an energy transfer schematic diagram of a series mode according to an exemplary embodiment.
FIG. 7 is an energy transfer schematic diagram of a parallel mode according to an exemplary embodiment.
FIG. 8 is an energy transfer schematic diagram of a three-power-source mode according to an exemplary embodiment.
FIG. 9 is an energy transfer schematic diagram of a dual-motor regenerative mode according to an exemplary embodiment.
FIG. 10 is a flowchart of a method for switching from the dual-motor drive mode to the parallel mode according to an exemplary embodiment.
FIG. 11 is a timing diagram of switching from the dual-motor drive mode to the parallel mode according to an exemplary embodiment.
FIG. 12 is an energy transfer schematic diagram for starting the engine according to an exemplary embodiment.
FIG. 13 is a flowchart of a hybrid drive system control method according to an exemplary embodiment.

### DESCRIPTION OF REFERENCE SIGNS

| | | | |
|---|---|---|---|
| 1 | Engine | 2 | Generator |
| 3 | Drive motor | 4 | Controller |
| 5 | Gear shift mechanism | 6 | Differential |
| 7 | Clutch | 8 | Drive gear |
| 9 | Generator gear | 10 | First motor shaft |
| 11 | Engine second-gear driving gear | 12 | Engine second-gear driven gear |
| 13 | Engine first-gear driving gear | 14 | Countershaft |
| 15 | Second motor shaft | 16 | Second motor reduction gear shaft |
| 17 | Second motor primary reduction driven gear | | |
| 18 | Second motor secondary reduction driving gear | | |
| 19 | Shaft gear | 20 | Countershaft reduction driving gear |
| 21 | Final drive gear | 22 | Engine output shaft |
| 100 | Hybrid drive system | 200 | Wheels |
| 300 | Storage battery | | |

### DETAILED DESCRIPTION

The embodiments of the present disclosure are described in detail below with reference to the accompanying drawings. The embodiments of the present disclosure are described below in detail. The embodiments described below are intended to explain the present disclosure and cannot be construed as a limitation on the present disclosure.

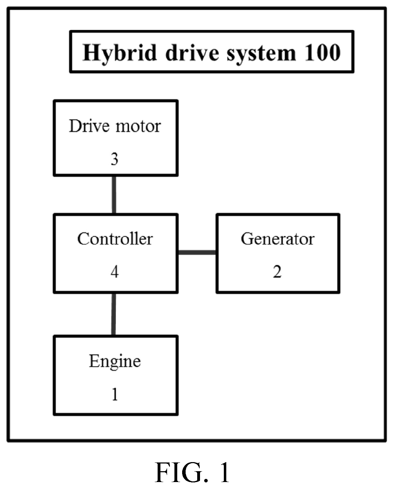

FIG. 1 is a block diagram of a hybrid drive system according to an exemplary embodiment. As shown in FIG. 1, The hybrid drive system 100 comprises an engine 1, a generator 2, a drive motor 3, and a controller 4.

Among them, the controller 4 is connected to the engine 1, the generator 2, and the drive motor 3 respectively. The controller 4 is used to control the drive motor 3 to increase torque when the generator 2 unloads torque and to control the drive motor 3 to decrease torque when the engine 1 loads torque during the system's switching from dual-motor drive mode to parallel mode. This ensures that the total output torque of the system is equal to the total demand torque, and the total demand torque remains constant.

In the present disclosure, the hybrid drive system can adopt different operating modes according to the vehicle being in different working conditions, which may specifically include the single-motor drive mode (i.e., the single drive motor drive mode), the dual-motor drive mode, the series mode, the parallel mode, the three-power-source mode, and the dual-motor regenerative mode (i.e., the energy recovery mode).

When the hybrid drive system is in the dual-motor drive mode, if the hybrid drive system meets the conditions for switching to the parallel mode, the hybrid drive system is controlled to switch from the dual-motor drive mode to the parallel mode. Herein, in order to ensure the power demand of the entire vehicle during the mode switching process and improve the driving experience, it is necessary to ensure that the total output torque of the hybrid drive system is equal to the total demand torque. Therefore, under the condition that the total demand torque is fixed, the drive motor 3 increases torque when the generator 2 unloads torque, and the drive motor 3 decreases torque when the engine 1 loads torque.

In the above technical solution, during the switching process of the hybrid drive system from the dual-motor drive mode to the parallel mode, when the generator unloads torque, the function of the generator starting the engine is realized by transferring the torque of the generator to the drive motor. Herein, the drive motor needs to withstand the torque output during the time it takes for the torque to be transferred from the generator to the engine and output a corresponding torque. In this way, it can be ensured that during the mode switching process, the total output torque of the hybrid drive system is equal to the total demand torque, so as to meet the vehicle's power demand and improve the driving experience.

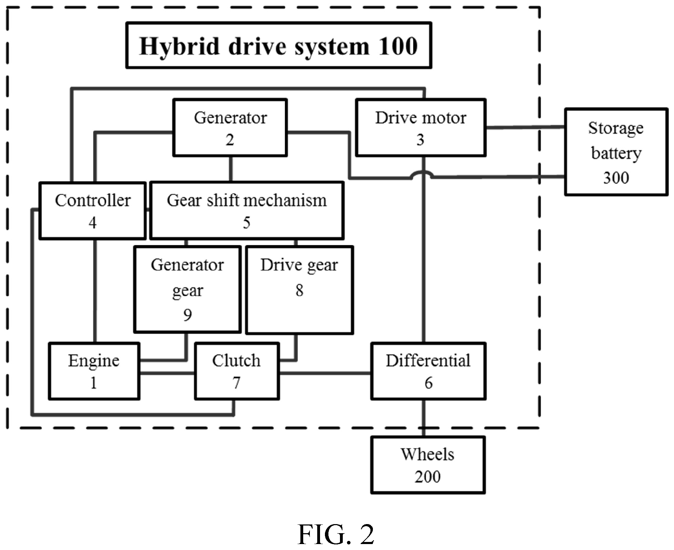

In an embodiment, as shown in Figure 2, the hybrid drive system may further include: a gear shift mechanism 5, a differential 6, a clutch 7, a drive gear 8, and a generator gear 9.

As shown in FIG. 2, the generator 2 is selectively connected to the drive gear 8 or the generator gear 9 via the gear shift mechanism 5; the drive gear 8 is connected to the engine 1 through the clutch 7; the generator gear 9 is connected to the engine 1; the differential 6 has a first end connected to the clutch 7, a second end connected to the drive motor 3, and a third end for connection to the wheels 200; the controller 4 is connected to the gear shift mechanism 5 and the clutch 7 respectively; in addition, the generator 2 and the drive motor 3 are connected to the storage battery 300 respectively.

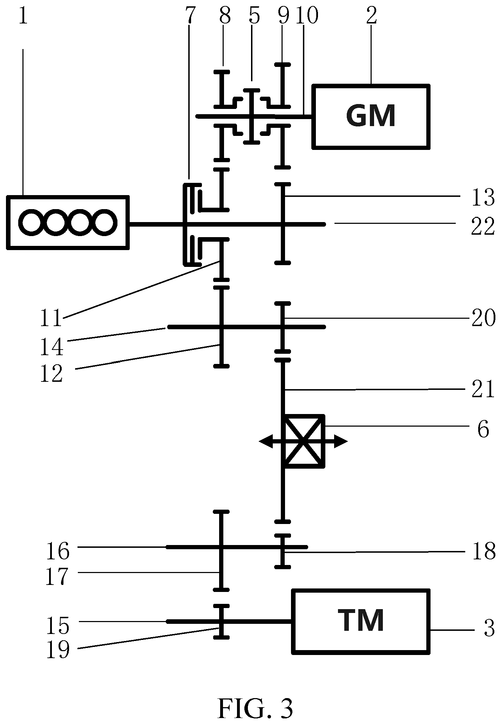

Specifically, as shown in Figure 3 (with the controller 4 not shown), the hybrid drive system further includes a first motor shaft 10, an engine second-gear driving gear 11, an engine second-gear driven gear 12, an engine first-gear driving gear 13, a countershaft 14, a second motor shaft 15, a second motor reduction gear shaft 16, a second motor primary reduction driven gear 17, a second motor secondary reduction driving gear 18, a shaft gear 19, a countershaft reduction driving gear 20 fixedly connected to the countershaft 14, a final drive gear 21 disposed on the differential 6, and an engine output shaft 22.

As shown in Figure 3, the generator gear 9 and the drive gear 8 are respectively idly sleeved on the first motor shaft 10. The gear shift mechanism 5 is disposed on the first motor shaft 10 and located between the generator gear 9 and the drive gear 8. The gear shift mechanism 5 is selectively engaged with the generator gear 9 or the drive gear 8, and the first motor shaft 10 is connected to the generator 2.

In the present disclosure, the generator 2 is connected to the storage battery 300 (not shown in Figure 3). The gear shift mechanism 5 may be a synchronizer (as shown in Figure 3) or a dog clutch shifting mechanism, and the output end of the generator 2 selectively connects to either the generator gear 9 or the drive gear 8 via the gear shift mechanism 5. Herein, when the engine 1 needs to be started or the engine 1 is required to drive the generator 2 for power generation, the gear shift mechanism 5 can engage with the generator gear 9; when the generator 2 needs to drive the wheels, the gear shift mechanism 5 can engage with the drive gear 8.

As shown in Figure 3, the engine output shaft 22 is connected to the engine 1. The engine second-gear driving gear 11 is idly sleeved on the engine output shaft 22, and the engine first- gear driving gear 13 is fixedly connected to the engine output shaft 22. The clutch 7 is disposed on the engine output shaft 22, with the driving end of the clutch 7 connected to the engine 1 and the driven end of the clutch 7 connected to the engine second- gear driving gear 11.

As shown in Figure 3, the engine second-speed driven gear 12 is mounted on the countershaft 14. The countershaft 14 can be connected to the differential 6 via the countershaft reduction driving gear 20 (fixedly mounted on the countershaft 14) and the final drive gear 21 (disposed on the differential 6). Herein, the engine second-gear driven gear 12 may be fixedly mounted on the countershaft 14 (as shown in Figure 3) or idly sleeved on the countershaft 14, and the present disclosure does not specifically limit the connection mode between the engine second-gear driven gear 12 and the countershaft 14. The engine second-gear driving gear 11 meshes with both the drive gear 8 and the engine second-gear driven gear 12, and the engine first-gear driving gear 13 meshes with the generator gear 9.

As shown in Figure 3, the second motor primary reduction driven gear 17 and the second motor secondary reduction driving gear 18 are respectively fixedly connected to the second motor reduction gear shaft 16. The shaft gear 19 is fixedly connected to the second motor shaft 15, and the second motor shaft 15 is connected to the drive motor 3. The second motor primary reduction driven gear 17 meshes with the shaft gear 19, and the final drive gear 21 meshes with both the countershaft reduction driving gear 20 and the second motor secondary reduction driving gear 18. Herein, the drive motor 3 can be mechanically connected to the differential 6 sequentially via the shaft gear 19, the second motor primary reduction driven gear 17, the second motor secondary reduction driving gear 18, and the final drive gear 21; the drive motor 3 is configured to be connected to the storage battery 300 (not shown in Figure 3).

In an embodiment, as shown in Figure 3, the generator gear 9, the engine first-gear driving gear 13, the countershaft reduction driving gear 20, the final drive gear 21, and the second motor second-gear reduction driving gear 18 are arranged to overlap in the axial direction (i.e., arranged in alignment with intervals in the radial direction). Meanwhile, the drive gear 8, the engine second-gear driving gear 11, the engine second-gear driven gear 12, the second motor primary reduction driven gear 17, and the shaft gear 19 are arranged to overlap in the axial direction. In this way, the hybrid drive system only has two rows of gears, which equivalently reduces the axial space, shortens the axial dimension of the hybrid drive system, and facilitates vehicle mounting and arrangement-rendering the hybrid drive system with a simple and compact structure and a straightforward assembly process.

The hybrid drive system can adopt different operating modes according to the vehicle being in different working conditions, which may specifically include the single-motor drive mode, the dual-motor drive mode, the series mode, the parallel mode, the three-power-source mode, and the dual-motor regenerative mode.

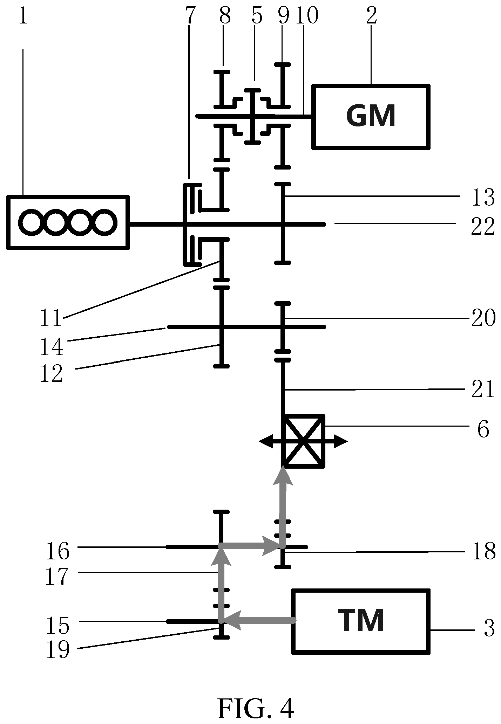

When the hybrid drive system is in pure electric mode and operating under medium and low loads, it operates in the single-motor drive mode. As shown in Figure 4, the gear shift mechanism 5 is in the neutral position, the clutch 7 is disengaged, the drive motor 3 independently drives the wheels 200, and both the engine 1 and the generator 2 are stationary (i.e., not work).

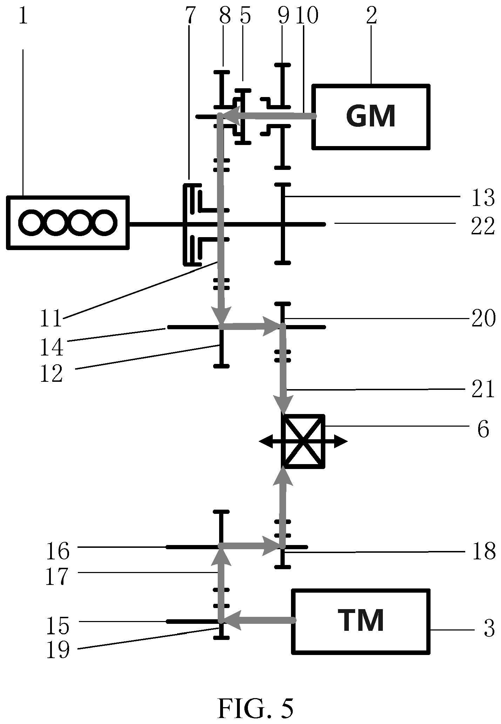

When the hybrid drive system is in pure electric mode and operating under high loads, it operates in the dual-motor drive mode. As shown in Figure 5, the gear shift mechanism 5 is in the left position and engages with the drive gear 8, the clutch 7 is disengaged, the generator 2 and the drive motor 3 jointly drive the wheels 200, and the engine 1 remains stationary.

When the hybrid drive system is in pure electric mode, it can select the single-motor drive mode or dual-motor drive mode according to the load magnitude, and the engine 1 will not be dragged to rotate (the engine 1 remains stationary). Thus, without sacrificing dynamic performance, the system can reduce the power of a single motor and the capacity of motor, achieve system cost reduction, and improve driving efficiency.

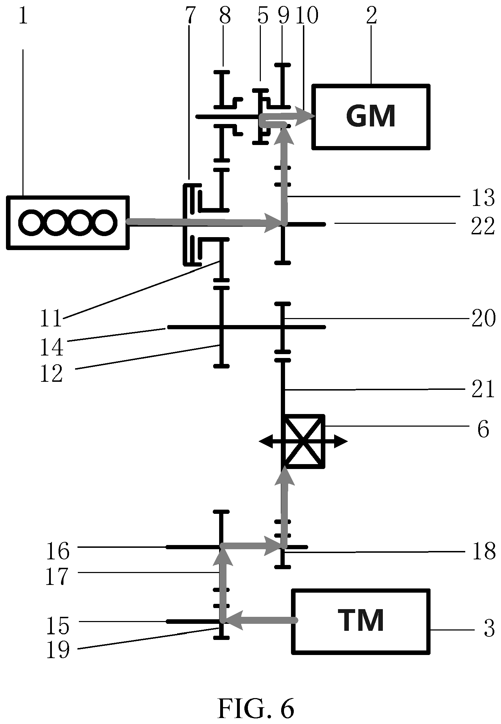

When the hybrid drive system operates in the series mode, as shown in Figure 6, the gear shift mechanism 5 is in the right position, and the clutch 7 is disengaged. The engine 1 engages with the generator gear 9 via the engine first-gear driving gear 13, driving the generator 2 to generate electricity. When the required electric power of the drive motor 3 is greater than the power generated by the generator 2, the storage battery 300 discharges, and the drive motor 3 drives the wheels 200; when the required electric power of the drive motor 3 is less than the power generated by the generator 2, the power generated by the generator 2 is supplied to the drive motor 3 to drive the wheels 200, and the excess generated power charges the storage battery 300.

In the dual-motor drive mode, when the generator 2 drives the wheels 200, it uses the drive gear 8 for power transmission. When the engine 1 and the generator 2 operate in series (i.e., in the series mode), the power of the engine 1 is transmitted via the generator gear 9. That is, the driving path and the power generation path of the generator 2 are different. In this way, the speed ratio matching between the pure electric drive of the generator 2 and the series power generation can be more flexible and optimal.

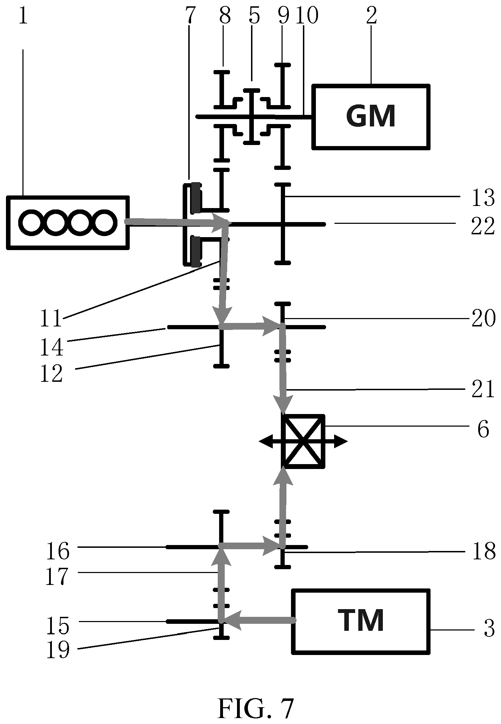

When the hybrid drive system operates in the parallel mode, as shown in Figure 7, the gear shift mechanism 5 is in the neutral position, the generator 2 is stationary, the clutch 7 is engaged, and the engine 1 transmits power to the differential 6 sequentially via the engine second-gear driving gear 11, the engine second-gear driven gear 12, the countershaft reduction driving gear 20, and the final drive gear 21.

When the hybrid drive system operates in the parallel mode, with the gear shift mechanism 5 in the neutral position and the generator 2 disconnected from the engine 1. This eliminates no-load loss and reduces the drag loss of the generator.

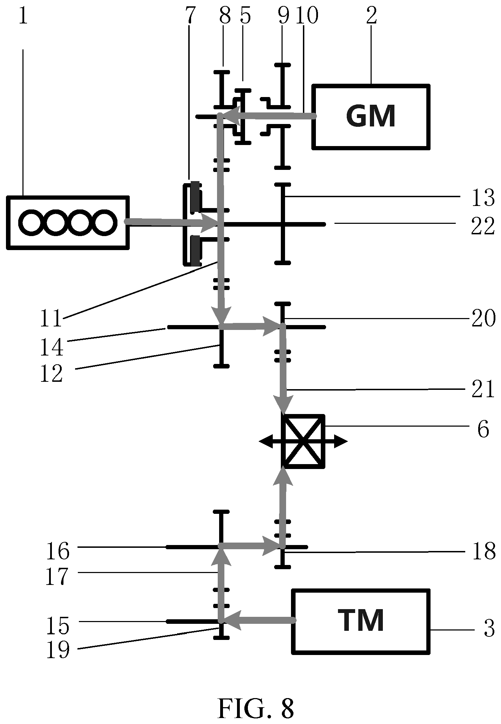

When the hybrid drive system operates in the three-power-source mode, as shown in Figure 8, the gear shift mechanism 5 is in the left position, the clutch 7 is engaged. And the generator 2 engages with the drive gear 8 via the gear shift mechanism 5, and transmits power to the differential 6 through the engine second-gear driving gear 11, the engine second-gear driven gear 12, the countershaft reduction driving gear 20, and the final drive gear 21, enabling the generator 2, the engine 1, and the drive motor 3 to jointly drive the wheels 200.

When the hybrid drive system operates in the three-power-source mode, the wheel-driving path of the engine 1 requires the clutch 7 to transmit torque, while the wheel-driving path of the generator 2 does not require the clutch 7 to transmit torque. Therefore, it can reduce the torque capacity of the clutch 7, lower its cost, and improve its reliability.

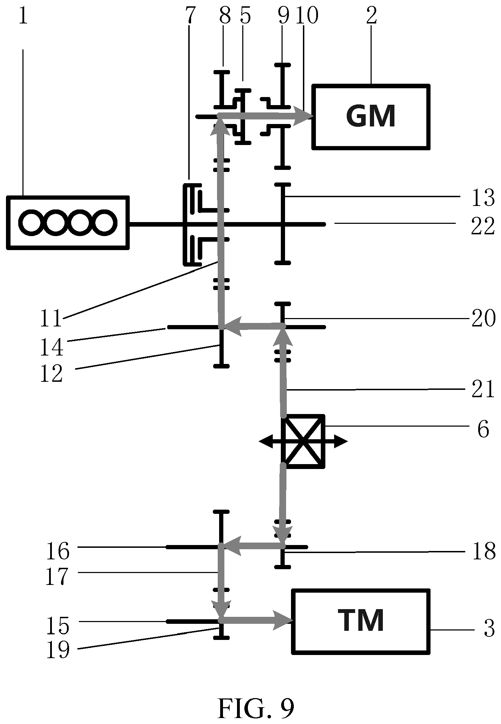

When the vehicle is braking, the hybrid drive system enters the dual-motor regenerative mode. As shown in Figure 9, the engine 1 shuts down, the differential 6 absorbs the kinetic energy during the braking process and transmits it to the generator 2 and the drive motor 3. The generator 2 and the drive motor 3 generate electricity with negative torque to charge the storage battery 300, enabling simultaneous energy recovery of the generator 2 and the drive motor 3, improving the energy recovery capacity and thereby enhancing energy utilization efficiency.

The hybrid drive system switches modes according to the vehicle's power demand. Ensuring the vehicle's overall power demand during mode switching is particularly important for improving driving experience. Below is a detailed description of the method for switching from the dual-motor drive mode to the parallel mode.

Specifically, the controller 4 is configured to realize the switching from the dual-motor drive mode to the parallel mode in the following ways:
In response to detecting that the system meets the conditions for switching from the dual-motor drive mode to the parallel mode, control the generator 2 to unload torque and the drive motor 3 to increase torque, so that the total output torque is equal to the total demand torque of the wheels 200, wherein the gear shift mechanism 5 engages with the drive gear 8 (i.e., the gear shift mechanism 5 is in the left position);
If the torque of the generator 2 is unloaded to zero, shift the gear shift mechanism 5 to the neutral position, control the generator 2 to output reverse torque, and when the rotational speed of the generator 2 is less than or equal to the first preset rotational speed, control the generator 2 to unload the reverse torque;
When the rotational speed of the generator 2 is zero, control the gear shift mechanism 5 to engage with the generator gear 9 and control the generator 2 to load torque to start the engine 1;
When the difference between the rotational speed of the engine 1 and the target rotational speed is greater than or equal to the second preset rotational speed, control the generator 2 to unload torque, wherein the target rotational speed is the rotational speed required for the clutch 7 to engage, the target rotational speed is determined based on the vehicle speed, and the second preset rotational speed is less than zero;
When the rotational speed of the engine 1 reaches the target rotational speed, control the engine 1 to start, engage the clutch 7, control the engine 1 to load torque, and control the drive motor 3 to reduce torque, so that the total output torque is equal to the total demand torque;
When the torque of the engine 1 reaches the preset torque, the control system operates in the parallel mode.

Specifically, the controller 4 is configured to control the system to operate in the parallel mode in the following ways: When the torque of the engine 1 reaches the preset torque, determine the first torque of the engine 1 and the second torque of the drive motor 3 according to the current total demand torque of the wheels 200; control the engine 1 to output the first torque, and control the drive motor 3 to output the second torque.

In an embodiment, the controller 4 is configured to determine the drive motor torque and engine torque corresponding to the current total demand torque according to the pre-established corresponding relationship between the total demand torque, drive motor torque, and engine torque, which are respectively determined as the second torque and the first torque. Wherein, when the engine 1 and the drive motor 3 perform torque distribution according to the corresponding relationship, the driving efficiency of the system is the highest; i.e., the aforesaid corresponding relationship records the optimal distribution amounts of the drive motor torque and engine torque that maximize the system's driving efficiency under the condition that the total demand torque is fixed. In this corresponding relationship, the total demand torque = the drive motor torque corresponding to the total demand torque + the engine torque corresponding to the total demand torque.

In addition, the controller 4 is also configured to control the gear shift mechanism 5 to the neutral position after the engine 1 starts. In this way, the generator 2 can be disconnected from the engine 1, eliminating no-load loss and reducing the drag loss of the generator.

Furthermore, to reduce wear of the clutch 7, the controller 4 is also configured to, when the rotational speed of the engine 1 reaches the target rotational speed, control the difference between the rotational speed of the engine 1 and the rotational speed of the wheels 200 to be within the preset rotational speed range, so as to perform engine speed alignment. Wherein, the engine rotational speed corresponds to the rotational speed of the clutch input end, and the rotational speed of the wheels 200 (i.e., the wheel-end rotational speed) corresponds to the rotational speed of the clutch output end; control the difference between the rotational speed of the engine 1 and the rotational speed of the wheels 200 to be within the preset rotational speed range means control the rotational speed difference between the clutch input end and output end to be within the preset rotational speed range.

The controller 4 is also configured to, when the hybrid drive system is in the dual-motor drive mode, determine that the hybrid drive system meets the conditions for switching from the dual-motor drive mode to the parallel mode if the remaining charge of the storage battery 300 is less than the first preset charge threshold and the vehicle speed is greater than the preset speed, or if the remaining charge is less than the second preset charge threshold and the total demand power is greater than the preset power threshold.

In an embodiment, when the vehicle is in low-battery high-speed cruising, as the remaining charge of the storage battery 300 decreases, the dual-motor drive mode cannot meet the wheel-end power demand; i.e., the remaining charge of the storage battery 300 is less than the first preset charge threshold and the vehicle speed is greater than the preset speed, it is necessary to switch to the parallel mode.

In another embodiment, when the vehicle is performing continuous overtaking with low battery, as the remaining charge of the storage battery 300 decreases, the dual-motor drive mode cannot meet the vehicle's dynamic performance demand; i.e., the remaining charge of the storage battery 300 is less than the second preset charge threshold and the total demand power is greater than the preset power threshold, to maintain the vehicle's dynamic performance, in this case, it is necessary to switch to the parallel mode.

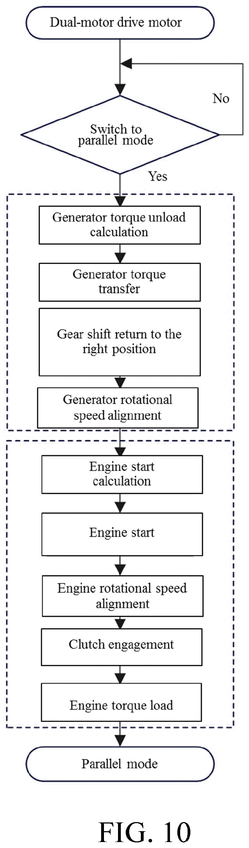

Below is a detailed description of the switching process from the dual-motor drive mode to the parallel mode with reference to the method flow chart shown in Figure 10. As shown in Figure 10, when the hybrid drive system is in the dual-motor drive mode, first determine whether the hybrid drive system meets the conditions for switching from the dual-motor drive mode to the parallel mode, i.e., determine whether to switch to the parallel mode. If it is determined to switch to the parallel mode, first calculate the amount of torque transferred from generator 2 to the drive motor through generator unloading, while maintaining the wheel-end torque (i.e., constant total demand torque). This includes: torque transfer of the generator 2 (reducing the torque of the generator 2 and correspondingly increasing the torque of the drive motor 3), gear shift mechanism 5 returning to the right position (the generator switches from the driving path to the power generation path), and generator speed alignment (reducing the generator speed to start the engine 1). Secondly, start the engine to drive the wheels through engine starting calculation, while maintaining the wheel-end torque unchanged. This includes: engine starting (the engine 1 is started by the generator 2), engine speed alignment (i.e., controlling the rotational speed difference between the clutch input end and output end to be within the preset rotational speed range), clutch 7 engagement (controlling the clutch 7 to engage to realize the engine-driven wheel path), and torque loading of the engine 1 (increasing the torque of the engine 1 and reducing the torque of the drive motor 3). Finally, the engine and the drive motor drive the wheels in parallel (i.e., parallel mode) is achieved. If it is determined not to switch to the parallel mode, continue to determine whether to switch to the parallel mode.

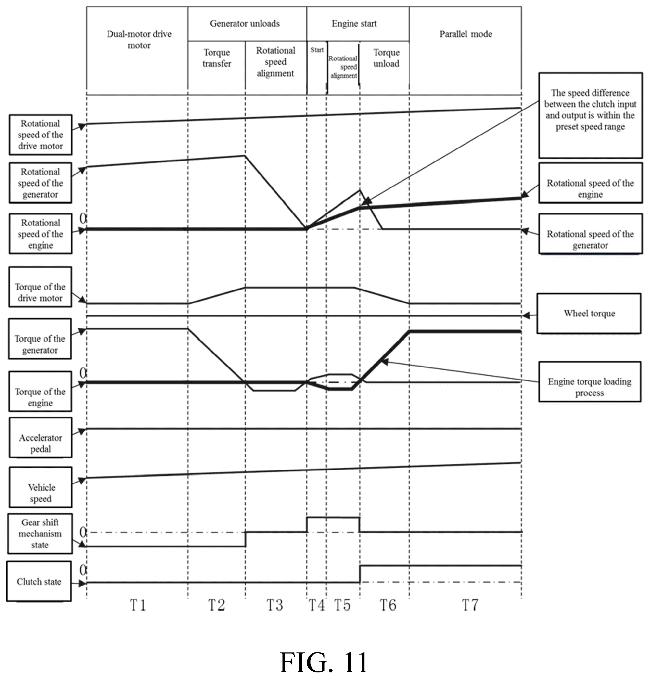

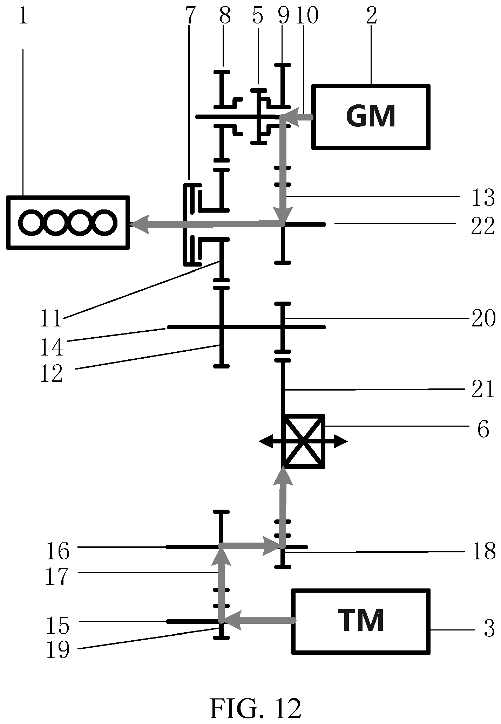

Below is a detailed description of the switching process from the dual-motor drive mode to the parallel mode with reference to the timing diagram shown in Figure 11, where Figure 11 is an example of a timing diagram when switching to driving in the parallel mode during slow acceleration driven by dual motors. Specifically, the switching process is divided into stages T1 to T7:
Stage T1: Dual-motor drive, with all states of the system remaining unchanged;
Stage T2: The torque of the generator 2 starts to unload, and to ensure the vehicle's dynamic performance meets the demand, the torque of the drive motor 3 increases. During this process, the gear shift mechanism 5 remains in the left position, i.e., the gear shift mechanism 5 engages with the drive gear 8, maintaining the generator's drive gear; the clutch 7 remains disconnected, meaning the engine 1 neither drives nor generates electricity;
Stage T3: After the torque of the generator 2 is completely unloaded to zero, the rotational speed of the generator 2 reaches the maximum at this point. The gear shift mechanism 5 is set to the neutral position (i.e., neutral gear). At this time, the generator 2 is controlled to output reverse torque to reduce its rotational speed, preparing for subsequently setting the gear shift mechanism 5 to the right position to couple the generator 2 with the engine 1 (which has a rotational speed of zero). When the rotational speed of the generator 2 is less than or equal to the first preset rotational speed (i.e., the generator's rotational speed is close to zero), the reverse torque of the generator 2 is unloaded. During this process, the output torque of the drive motor 3 is equal to the total demand torque;
Stage T4: When the rotational speed of the generator 2 drops to zero, speed alignment with the engine 1 is completed. At this point, as shown in Figure 12, the shifting mechanism 5 can be smoothly engaged to the right position. After the gear shift mechanism 5 successfully engages with the generator gear 9, torque is loaded to the generator 2 to drive the engine 1 to start. During this process, the clutch 7 is not engaged, and the output of the drive motor 3 is equal to the total demand torque;
Stage T5: The rotational speed of the engine 1 increases, and when the difference between its rotational speed and the target rotational speed is greater than or equal to the second preset rotational speed (i.e., the rotational speed of the engine 1 is close to the rotational speed required for the clutch 7 to engage), the torque of the generator 2 is unloaded. During this process, the clutch 7 is not engaged, and the output of the drive motor 3 is equal to the total demand torque;
Stage T6: After the rotational speed of the engine 1 reaches the rotational speed required for the clutch 7 to engage (i.e., the target rotational speed), the engine 1 is ignited and started, and the clutch 7 is engaged. The engine 1 officially participates in driving and outputs torque, while the torque of the drive motor 3 decreases to ensure the vehicle's dynamic performance meets the demand. With the engine 1 operating normally, the gear shift mechanism 5 is set from the right position to the neutral position, thus disconnecting the generator 2 from the generator transmission path and reducing the drag of the generator 2;
Stage T7: After reaching the preset torque, the system officially enters the parallel mode, distributing the engine torque and drive motor torque according to the optimal distribution amount that achieves the highest efficiency.

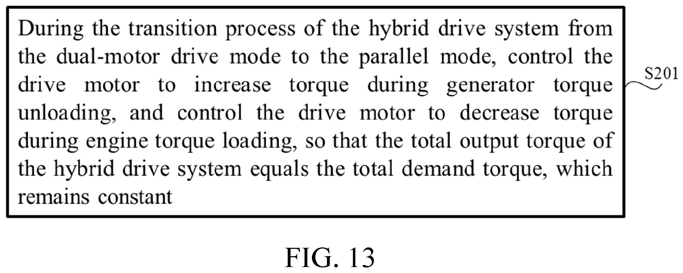

Figure 13 is a flowchart of a hybrid drive system control method according to an exemplary embodiment, where the method can be applied to a controller, for example, controller 4 shown in Figure 1. As shown in Figure 12, the aforesaid method may include step S201.

In step S201, during the process of the hybrid drive system switching from the dual-motor drive mode to the parallel mode, when the generator unloads torque, control the drive motor to increase torque; and when the engine loads torque, control the drive motor to reduce torque, so that the total output torque of the hybrid drive system is equal to the total demand torque, and the total demand torque is constant.

In the above technical solution, during the switching process of the hybrid drive system from the dual-motor drive mode to the parallel mode, when the generator unloads torque, the function of the generator starting the engine is realized by transferring the torque of the generator to the drive motor. Herein, the drive motor needs to withstand the torque output during the time it takes for the torque to be transferred from the generator to the engine and output a corresponding torque. In this way, it can be ensured that during the mode switching process, the total output torque of the hybrid drive system is equal to the total demand torque, so as to meet the vehicle's power demand and improve the driving experience.

In an implementation, the system further includes: a gear shift mechanism, a differential, a clutch, a drive gear, and a generator gear;
wherein the generator is selectively connected to the drive gear or the generator gear via the gear shift mechanism;
the drive gear is connected to the engine via the clutch;
the generator gear is connected to the engine;
the differential has a first end connected to the clutch, a second end connected to the drive motor, and a third end configured to connect to the wheels;
Controlling the drive motor to increase torque when the generator unloads torque and controlling the drive motor to reduce torque when the engine loads torque during the switching process of the system from the dual-motor drive mode to the parallel mode, so that the total output torque of the system is equal to the total demand torque, includes:
   In response to detecting that the system meets the conditions for switching from the dual-motor drive mode to the parallel mode, control the generator to unload torque and the drive motor to increase torque, so that the total output torque is equal to the total demand torque of the wheels, where the gear shift mechanism is connected to the drive gear;
   If the torque of the generator is unloaded to zero, control the gear shift mechanism to the neutral position, control the generator to output reverse torque, and when the rotational speed of the generator is less than or equal to the first preset rotational speed, control the generator to unload the reverse torque;
   When the rotational speed of the generator is zero, control the gear shift mechanism to connect with the generator gear, and control the generator to load torque to start the engine;
   When the difference between the rotational speed of the engine and the target rotational speed is greater than or equal to the second preset rotational speed, control the generator to unload torque, where the target rotational speed is determined based on the vehicle speed, and the second preset rotational speed is less than zero;
   When the rotational speed of the engine reaches the target rotational speed, control the engine to start and the clutch to engage, and control the engine to load torque and the drive motor to reduce torque, so that the total output torque is equal to the total demand torque.

In an implementation, the method further includes:
When the torque of the engine reaches the preset torque, control the system to operate in the parallel mode.

In an implementation, controlling the system to operate in the parallel mode when the torque of the engine reaches the preset torque includes:
When the torque of the engine reaches the preset torque, determine the first torque of the engine and the second torque of the drive motor according to the current total demand torque of the wheels;
Control the engine to output the first torque, and control the drive motor to output the second torque.

In an implementation, determining the first torque of the engine and the second torque of the drive motor according to the current total demand torque of the wheels includes:
Determine the drive motor torque and engine torque corresponding to the current total demand torque according to the pre-established corresponding relationship between the total demand torque, drive motor torque, and engine torque, which are respectively determined as the second torque and the first torque. Wherein, when the engine and the drive motor perform torque distribution according to the corresponding relationship, the driving efficiency of the system is the highest.

In an implementation, the method further includes:
After the engine starts, control the gear shift mechanism to the neutral position.

In an implementation, the method further includes:
When the rotational speed of the engine reaches the target rotational speed, control the difference between the rotational speed of the engine and the rotational speed of the wheels to be within the preset rotational speed range.

In an implementation, the method further includes:
When the system is in the dual-motor drive mode, determine that the system meets the condition if the remaining charge of the storage battery is less than the first preset charge threshold and the vehicle speed is greater than the preset speed, or if the remaining charge is less than the second preset charge threshold and the total demand power is greater than the preset power threshold, where the storage battery is connected to the generator and the drive motor respectively.

In an implementation, the method may further include the following two steps:
Acquire the current power demand of the hybrid drive system;
If the current power demand is greater than the first demand threshold and less than or equal to the second demand threshold, control the hybrid drive system to operate in the dual-motor drive mode; when the current power demand is less than or equal to the first demand threshold, the system operates in the single-motor drive mode. The output capability of the drive motor is greater than or equal to the second demand threshold, and the drive allocation amount of the drive motor in the dual-motor drive mode is less than the first demand threshold, so that during the switching process of the system from the dual-motor drive mode to the hybrid mode, when the generator unloads torque, the drive motor has a torque margin for compensating the torque unloaded by the generator.

In the present disclosure, the current power demand may be the current total demand torque of the hybrid drive system, or the current demand power of the hybrid drive system.

When the current power demand of the hybrid drive system is less than or equal to the first demand threshold, the hybrid drive system operates in the single-motor drive mode (i.e., single drive motor drive mode), i.e., drives the vehicle via the drive motor; when the current power demand of the hybrid drive system is greater than the first demand threshold and less than or equal to the second demand threshold, the hybrid drive system operates in the dual-motor drive mode, i.e., drives the vehicle jointly via the drive motor and the generator. Wherein, the first demand threshold is less than the second demand threshold. When the current power demand is the current total demand torque, both the first demand threshold and the second demand threshold are torque values; when the current power demand is the current demand power, both the first demand threshold and the second demand threshold are power values.

The output capability of the drive motor is greater than or equal to the second demand threshold, i.e., the output capability of the drive motor is greater than the first demand threshold. This indicates that it is not because the current power demand exceeds the output capability of the drive motor that the generator needs to be started for power compensation. Such a design is to, during the switching process from the dual-motor drive mode to the hybrid mode, since there is a process where the generator unloads torque to switch to the gear for starting the engine, it is necessary to increase the output of the drive motor to compensate for the unloaded part of the generator. Therefore, during dual-motor driving, the drive motor cannot output at maximum power/torque, and the drive allocation amount of the drive motor in the dual-motor drive mode (i.e., the output of the drive motor) is less than the first demand threshold, so that the drive motor has sufficient torque margin for compensating the torque unloaded by the generator during mode switching.

For example, the first demand threshold is 80% of the output capability of the drive motor, and the second demand threshold is 90% of the output capability of the drive motor.

In the above implementation, when the current power demand of the hybrid drive system is greater than the first demand threshold and less than or equal to the second demand threshold, the system drives the vehicle jointly via the generator and the drive motor (i.e., dual-motor drive mode); when the current power demand is less than or equal to the first demand threshold, the system drives the vehicle via the drive motor (i.e., single-motor drive mode). Wherein, the output capability of the drive motor is greater than or equal to the second demand threshold, and the drive allocation amount of the drive motor in the dual-motor drive mode is less than the first demand threshold. In this way, during the switching process of the hybrid drive system from the dual-motor drive mode to the hybrid mode, when the generator unloads torque, the drive motor has a torque margin for compensating the torque unloaded by the generator, so as to transfer the torque of the generator to the drive motor and realize the function of the generator starting the engine. Herein, the drive motor needs to withstand the torque output during the time it takes for the torque to be transferred from the generator to the engine and output a corresponding torque. Thus, it can be ensured that during the mode switching process, the total output of the hybrid drive system is equal to the total demand, so as to meet the vehicle's power demand and improve the driving experience.

In an implementation, the method may further include the following step:
When the current power demand is greater than the second demand threshold, control the hybrid drive system to operate in the hybrid mode.

In the present disclosure, when the current power demand is greater than the second demand threshold, it indicates that the dual-motor drive mode can no longer meet the vehicle's power demand. At this time, the engine can be started to drive the vehicle or to drive the generator to generate electricity, i.e., control the hybrid drive system to switch from the dual-motor drive mode to the hybrid mode.

Wherein, during the switching process of the hybrid drive system from the dual-motor drive mode to the hybrid mode, when the generator unloads torque, control the drive motor to increase torque; and when the engine loads torque, control the drive motor to reduce torque, so that the total output torque of the hybrid drive system is equal to the total demand torque (i.e., the current total demand torque). Herein, the current total demand torque is constant, i.e., the vehicle's demand torque is fixed.

To ensure the vehicle's overall power demand during the mode switching process and improve the driving experience, it is necessary to ensure that the total output torque of the hybrid drive system is equal to the total demand torque. Thus, under the condition that the total demand torque is fixed, the drive motor increases torque when the generator unloads torque, and reduces torque when the engine loads torque.

In the above implementation, during the switching process of the hybrid drive system from the dual-motor drive mode to the hybrid mode, when the generator unloads torque, the function of the generator starting the engine is realized by transferring the torque of the generator to the drive motor. Herein, the drive motor needs to withstand the torque output during the time it takes for the torque to be transferred from the generator to the engine and output a corresponding torque. Thus, it can be ensured that during the mode switching process, the total output of the hybrid drive system is equal to the total demand, so as to meet the vehicle's power demand and improve the driving experience.

Below is a detailed description of the specific implementation for controlling the hybrid drive system to operate in the hybrid mode with reference to Figures 2 and 3. Specifically, the hybrid mode includes the parallel mode and the three-power-source mode. At this time, the hybrid drive system can be controlled to operate in the hybrid mode through the following steps (1) to (3):
Step (1): Control the engine 1 to start.
Step (2): After the engine 1 is started, determine the target mode of the hybrid drive system 100 from the parallel mode and the three-power-source mode according to the remaining charge of the storage battery.
Step (3): Control the hybrid drive system 100 to operate in the target mode.

The following is a detailed description of the specific implementation for controlling the engine 1 to start in step (1) above. Specifically, when the current power demand is the current total demand torque, this can be achieved through steps (11) to (15):
Step (11): Control the generator 2 to unload torque and the drive motor 3 to increase torque, so that the total output torque is equal to the current total demand torque of the wheels (i.e., the total demand torque), where the gear shift mechanism 5 is connected to the drive gear 8 (i.e., the gear shift mechanism 5 is in the left position), and the current total demand torque is constant.
Step (12): If the torque of the generator 2 is unloaded to zero, control the gear shift mechanism 5 to the neutral position, control the generator 2 to output reverse torque, and when the rotational speed of the generator 2 is less than or equal to the first preset rotational speed, control the generator 2 to unload the reverse torque.
Step (13): When the rotational speed of the generator 2 is zero, control the gear shift mechanism 5 to connect with the generator gear 9, and control the generator 2 to load torque to start the engine 1.
Step (14): When the difference between the rotational speed of the engine 1 and the target rotational speed is greater than or equal to the second preset rotational speed, control the generator 2 to unload torque.
Step (15): When the rotational speed of the engine 1 reaches the target rotational speed, control the engine 1 to start.

After controlling the engine 1 to start, the clutch 7 can also be controlled to engage, and the engine 1 can be controlled to load torque while the drive motor 3 is controlled to reduce torque, so that the total output torque is equal to the total demand torque. Meanwhile, the target mode of the hybrid drive system is determined from the parallel mode and the three-power-source mode according to the remaining charge of the storage battery 300; when the torque of the engine 1 reaches the preset torque, the system is controlled to operate in the target mode.

Below is a detailed description of the specific implementation for determining the target mode of the hybrid drive system from the parallel mode and the three-power-source mode according to the remaining charge of the storage battery in step (2) above.

Specifically, if the remaining charge of the storage battery is greater than or equal to the third preset charge threshold, determine the driving efficiency of the hybrid drive system when outputting the current power demand in the parallel mode and the driving efficiency when outputting the current power demand in the three-power-source mode; then, determine the one with the higher corresponding driving efficiency between the parallel mode and the three-power-source mode as the target mode of the hybrid drive system.

If the remaining charge of the storage battery is less than the third preset charge threshold, determine the parallel mode as the target mode.

Wherein, when the remaining charge of the storage battery is less than the third preset charge threshold, it indicates that the remaining charge of the storage battery is insufficient to support the generator and the drive motor to drive the vehicle simultaneously. At this time, the generator can be selected to stop working, i.e., the hybrid drive system operates in the parallel mode.

Below is a detailed description of the specific implementation for determining the driving efficiency of the hybrid drive system when outputting the current power demand in the parallel mode.

Specifically, for the parallel mode, a first corresponding relationship between the demand torque, drive motor torque, engine torque, and driving efficiency may be pre-established. At this time, the driving efficiency, drive motor torque, and engine torque corresponding to the current total demand torque can be determined according to the first corresponding relationship, which are respectively determined as the first driving efficiency, the second torque, and the first torque. Wherein, the first driving efficiency is the driving efficiency of the hybrid drive system when outputting the current power demand in the parallel mode.

When the engine 1 and the drive motor 3 perform torque distribution according to the first corresponding relationship, the driving efficiency of the hybrid drive system is the highest. That is, the first corresponding relationship records the optimal distribution amount of the drive motor torque and engine torque that maximizes the driving efficiency of the hybrid drive system under a fixed demand torque. In the first corresponding relationship, the current total demand torque = the drive motor torque corresponding to the current total demand torque + the engine torque corresponding to the current total demand torque, i.e., the current total demand torque = the first torque + the second torque.

Below is a detailed description of the specific implementation for determining the driving efficiency of the hybrid drive system when outputting the current power demand in the three-power-source mode.

Specifically, for the three-power-source mode, a second corresponding relationship between the demand torque, drive motor torque, generator torque, engine torque, and driving efficiency may be pre-established. At this time, the driving efficiency, drive motor torque, generator torque, and engine torque corresponding to the current total demand torque can be determined according to the second corresponding relationship, which are respectively determined as the second driving efficiency, the third torque, the fourth torque, and the fifth torque. Wherein, the second driving efficiency is the driving efficiency of the hybrid drive system when outputting the current power demand in the three-power-source mode.

When the engine 1, generator 2, and drive motor 3 perform torque distribution according to the second corresponding relationship, the driving efficiency of the hybrid drive system is the highest. That is, the second corresponding relationship records the optimal distribution amount of the drive motor torque, engine torque, and generator torque that maximizes the driving efficiency of the hybrid drive system under a fixed demand torque. In the second corresponding relationship, the current total demand torque = the drive motor torque corresponding to the current total demand torque + the generator torque corresponding to the current total demand torque + the engine torque corresponding to the current total demand torque, i.e., the current total demand torque = the third torque + the fourth torque + the fifth torque.

Below is a detailed description of the specific implementation for controlling the hybrid drive system 100 to operate in the target mode in step (3) above.

Specifically, if the target mode is the parallel mode, control the engine 1 to output the first torque and the drive motor 3 to output the second torque.

When the target mode of the hybrid drive system is the parallel mode, after the engine 1 is started, control the gear shift mechanism 5 to the neutral position. This can disconnect the generator 2 from the engine 1, eliminating no-load loss and reducing the generator's drag loss.

If the target mode is the three-power-source mode, control the drive motor 3 to output the third torque, the generator 2 to output the fourth torque, and the engine 1 to output the fifth torque.

In addition, the present disclosure further provides a vehicle, including:
a hybrid drive system 100, wherein the hybrid drive system 100 is the above-mentioned hybrid drive system provided by the present disclosure; and
wheels 200.

The preferred implementations of the present disclosure have been described in detail above with reference to the accompanying drawings. However, the present disclosure is not limited to the specific details in the above implementations. Within the scope of the technical concept of the present disclosure, various simple modifications can be made to the technical solutions of the present disclosure, and these simple modifications all fall within the protection scope of the present disclosure.

In addition, it should be noted that the various specific technical features described in the above specific implementations can be combined in any suitable manner without contradiction. To avoid unnecessary repetition, the present disclosure will not describe various possible combinations separately.

Furthermore, various different implementations of the present disclosure can also be arbitrarily combined with each other, as long as they do not violate the idea of the present disclosure, which shall also be regarded as the content disclosed by the present disclosure.

## Claims

1. A hybrid drive system (100), comprising: an engine (1), a generator (2), a drive motor (3), and a controller (4);
wherein the controller (4) being connected to the engine (1), the generator (2), and the drive motor (3) respectively, and is configured to, during the switching process of the system (100) from the dual-motor drive mode to the parallel mode, control the drive motor (3) to increase torque when the generator (2) unloads torque, and control the drive motor (3) to reduce torque when the engine (1) loads torque, to ensure the total output torque of the system (100) is equal to the total demand torque, and the total demand torque is constant.

2. The system (100) according to claim 1, wherein the system (100) further comprises: a gear shift mechanism (5), a differential (6), a clutch (7), a drive gear (8), and a generator gear (9);
wherein the generator (2) is selectively connected to the drive gear (8) or the generator gear (9) via the gear shift mechanism (5);
the drive gear (8) is connected to the engine (1) via the clutch (7);
the generator gear (9) is connected to the engine (1);
the differential (6) has a first end connected to the clutch (7), a second end connected to the drive motor (3), and a third end configured to connect to the wheel (200).

3. The system (100) according to claim 2, wherein the controller (4) is connected to the gear shift mechanism (5) and the clutch (7) respectively, and is configured to:
in response to detecting that the system (100) meets the conditions for switching from the dual-motor drive mode to the parallel mode, control the generator (2) to unload torque and the drive motor (3) to increase torque, to ensure the total output torque is equal to the total demand torque of the wheel (200), wherein the gear shift mechanism (5) is connected to the drive gear (8);
if the torque of the generator (2) is unloaded to zero, control the gear shift mechanism (5) to the neutral position, control the generator (2) to output reverse torque, and when the rotational speed of the generator (2) is less than or equal to the first preset rotational speed, control the generator (2) to unload the reverse torque;
when the rotational speed of the generator (2) is zero, control the gear shift mechanism (5) to connect with the generator gear (9), and control the generator (2) to load torque to start the engine (1);
when the difference between the rotational speed of the engine (1) and the target rotational speed is greater than or equal to the second preset rotational speed, control the generator (2) to unload torque, wherein the target rotational speed is determined based on the vehicle speed, and the second preset rotational speed is less than zero;
when the rotational speed of the engine (1) reaches the target rotational speed, control the engine (1) to start and the clutch (7) to engage, and control the engine (1) to load torque and the drive motor (3) to reduce torque, to ensure the total output torque is equal to the total demand torque.

4. The system (100) according to claim 3, wherein the controller (4) is further configured to control the system (100) to operate in the parallel mode when the torque of the engine (1) reaches the preset torque.

5. The system (100) according to claim 4, wherein the controller (4) is configured to:
when the torque of the engine (1) reaches the preset torque, determine the first torque of the engine (1) and the second torque of the drive motor (3) according to the current total demand torque of the wheel (200);
control the engine (1) to output the first torque, and control the drive motor (3) to output the second torque.

6. The system (100) according to claim 5, wherein the controller (4) is configured to determine the drive motor torque and engine torque corresponding to the current total demand torque according to the pre-established corresponding relationship between the total demand torque, drive motor torque, and engine torque, which are respectively determined as the second torque and the first torque; wherein, when the engine (1) and the drive motor (3) perform torque distribution according to the corresponding relationship, the driving efficiency of the system (100) is the highest.

7. The system (100) according to any one of claims 3 to 6, wherein controller (4) is further configured to control the gear shift mechanism (5) to the neutral position after the engine (1) is started.

8. The system (100) according to any one of claims 3 to 7, wherein the controller (4) is further configured to control the difference between the rotational speed of the engine (1) and the rotational speed of the wheel (200) to be within the preset rotational speed range when the rotational speed of the engine (1) reaches the target rotational speed.

9. The system (100) according to any one of claims 3 to 8, wherein the controller (4) is further configured to:
when the system (100) is in the dual-motor drive mode, determine that the system (100) meets the condition if the remaining charge of the storage battery (300) is less than the first preset charge threshold and the vehicle speed is greater than the preset speed, or if the remaining charge is less than the second preset charge threshold and the total demand power is greater than the preset power threshold, wherein the storage battery (300) is connected to the generator (2) and the drive motor (3) respectively.

10. A hybrid drive system control method, the system comprising an engine, a generator, and a drive motor, and the method comprising:
during the switching process of the system from the dual-motor drive mode to the parallel mode, when the generator unloads torque, control the drive motor to increase torque; and when the engine loads torque, control the drive motor to reduce torque, to ensure the total output torque of the system being equal to the total demand torque, and the total demand torque being constant.

11. The method according to claim 10, wherein the system further comprises: a gear shift mechanism, a differential, a clutch, a drive gear, and a generator gear;
wherein the generator is selectively connected to the drive gear or the power generator gear via the gear shift mechanism;
the drive gear is connected to the engine via the clutch;
the generator gear is connected to the engine;
the differential has a first end connected to the clutch, a second end connected to the drive motor, and a third end configured to connect to wheel;
duringthe switching process of the system from the dual-motor drive mode to the parallel mode, controlling the drive motor to increase torque when the generator unloads torque and controlling the drive motor to reduce torque when the engine loads torque to ensure the total output torque of the system is equal to the total demand torque comprises:
In response to detecting that the system meets the conditions for switching from the dual-motor drive mode to the parallel mode, controlling the generator to unload torque and the drive motor to increase torque, to ensure the total output torque is equal to the total demand torque of the wheel, wherein the gear shift mechanism is connected to the drive gear;
If the torque of the generator is unloaded to zero, controlling the gear shift mechanism to the neutral position, controlling the generator to output reverse torque, and when the rotational speed of the generator is less than or equal to the first preset rotational speed, controlling the generator to unload the reverse torque;
when the rotational speed of the generator is zero, controlling the gear shift mechanism to connect with the generator gear, and controlling the generator to load torque to start the engine; when the difference between the rotational speed of the engine and the target rotational speed is greater than or equal to the second preset rotational speed, controlling the generator to unload torque, wherein the target rotational speed is determined based on the vehicle speed, and the second preset rotational speed is less than zero;
when the rotational speed of the engine reaches the target rotational speed, controlling the engine to start and the clutch to engage, and controlling the engine to load torque and the drive motor to reduce torque, to ensure the total output torque is equal to the total demand torque.

12. The method according to claim 11, wherein the method further comprises:
when the torque of the engine reaches the preset torque, controlling the system to operate in the parallel mode.

13. The method according to claim 12, wherein controlling the system to operate in the parallel mode when the torque of the engine reaches the preset torque comprises:
when the torque of the engine reaches the preset torque, determining the first torque of the engine and the second torque of the drive motor according to the current total demand torque of the wheel;
controlling the engine to output the first torque, and controlling the drive motor to output the second torque.

14. The method according to claim 13, wherein determining the first torque of the engine and the second torque of the drive motor according to the current total demand torque of the wheel comprises:
determining the drive motor torque and engine torque corresponding to the current total demand torque according to the pre-established corresponding relationship between the total demand torque, drive motor torque, and engine torque, which are respectively determined as the second torque and the first torque; wherein, when the engine and the drive motor perform torque distribution according to the corresponding relationship, the driving efficiency of the system is the highest.

15. The method according to any one of claims 11 to 14, wherein the method further comprises:
after the engine is started, controlling the gear shift mechanism to the neutral position.

16. The method according to any one of claims 11 to 15, wherein the method further comprises:
when the rotational speed of the engine reaches the target rotational speed, controlling the difference between the rotational speed of the engine and the rotational speed of the wheel to be within the preset rotational speed range.

17. The method according to any one of claims 11 to 16, wherein the method further comprises:
when the system is in the dual-motor drive mode, determining that the system meets the condition if the remaining charge of the storage battery is less than the first preset charge threshold and the vehicle speed is greater than the preset speed, or if the remaining charge is less than the second preset charge threshold and the total demand power is greater than the preset power threshold, wherein the storage battery is connected to the generator and the drive motor respectively.

18. The method according to any one of claims 10 to 17, wherein the method further comprises:
obtaining the current power demand of the system;
if the current power demand is greater than the first demand threshold and less than or equal to the second demand threshold, controlling the system to operate in the dual-motor drive mode, wherein when the current power demand is less than or equal to the first demand threshold, the system operates in the single-motor drive mode; the output capability of the drive motor is greater than or equal to the second demand threshold; and the drive distribution amount of the drive motor in the dual-motor drive mode is less than the first demand threshold, to ensure during the switching process of the system from the dual-motor drive mode to the hybrid mode, when the generator unloads torque, the drive motor has a torque margin for compensating the torque unloaded by the generator.

19. The method according to claim 18, wherein the method further comprises:
when the current power demand is greater than the second demand threshold, controlling the system to operate in the hybrid mode.

20. The method according to claim 19, wherein the drive motor and the generator are respectively connected to a storage battery, and the hybrid mode includes the parallel mode and the three-power-source mode;
the controlling the system to operate in the hybrid mode comprises:
controlling the engine to start;
after the engine is started, determining the target mode of the system from the parallel mode and the three-power-source mode according to the remaining charge of the storage battery;
controlling the system to operate in the target mode.

21. The method according to claim 20, wherein determining the target mode of the system from the parallel mode and the three-power-source mode according to the remaining charge of the storage battery comprises:
if the remaining charge is greater than or equal to the third preset charge threshold, determining the driving efficiency of the system when outputting the current power demand in the parallel mode and the driving efficiency of the system when outputting the current power demand in the three-power-source mode;
determining the one with the higher corresponding driving efficiency between the parallel mode and the three-power-source mode as the target mode of the system.

22. The method according to claim 21, wherein
determining the target mode of the system from the parallel mode and the three-power-source mode according to the remaining charge of the storage battery further comprises:
if the remaining charge is less than the third preset charge threshold, determining the parallel mode as the target mode.

23. A vehicle comprising:
a hybrid drive system (100), wherein the hybrid drive system (100) is the hybrid drive system according to any one of claims 1 to 9; and
a wheel (200).
